# EUROPEAN PATENT APPLICATION

(11) **EP 1 241 604 A1**
(43) Date of publication of application: **18.09.2002**
(21) Application number: 01126533.7
(22) Date of filing: 14.11.2001
(51) Int. Cl.: G06F 17/60

(54) **Method and device for performing accounting over a data communications network**

(30) Priority: 21.11.2000 IT MI002506
(71) Applicant: Gestweb S.p.A., 25124 Brescia (IT)
(72) Inventor: Vinati, Felice, 25069 Villa Carcina (Brescia) (IT); Vinati, Samuele, 25123 Brescia (IT)
(74) Representative: Modiano, Guido, Dr.-Ing.

(57) **Abstract**

A device for performing accounting over a data communications network, comprising a unit (1) for accessing a data communications network;
at least one application program (4) that resides in the unit for accessing the data communications network;
at least one database (5) suitable to store data of at least one user, the application program comprising means for entering data related to the user, means for enabling electronic commerce, and means suitable to perform invoicing and cancellation of the products sold over the data communications network from an inventory of the user.

## Description

The present invention relates to a method and a device for performing accounting over a data communications network, particularly the Internet.

It is known that the tax laws currently in force require each company to keep accurate accounts that allow to determine the amount of tax due for each company, based on turnover, and at the same time can be used not only for tax purposes but also for civil law purposes, i.e. when for example the company has to report its turnover to third parties, for example in order to match percentages, royalty payments, and the like.

Currently these accounts are held by specialized personnel who in any case have the burden of storing on their computers a database that can become considerably large and contains all the data related to the company being managed.

Furthermore, in the case of electronic commerce, which is becoming increasingly widespread over the Internet, companies that trade online must be able to "record" in some way their commercial transactions, both for civil-law purposes and for tax purposes, so that the accounting personnel can have a trace of these completed operations.

Naturally, the very essence of electronic commerce provides for absolute lack of direct contact between a sales operator and the buyer who makes a purchase via the Internet, and accordingly the logging of the individual sales must be performed at a later time or by using an appropriate program, which each company has to devise on its own.

Naturally, keeping clear and tidy accounts is one of the essential points in ensuring the prosperity of a company.

The aim of the present invention is to provide a method and a device for performing the accounting of a company over a data communications network, which allows to relieve the specialized personnel of the burden of handling and maintaining a database that contains the tax-related data of the company.

Within the scope of this aim, an object of the present invention is to provide a method and a device for performing the accounting of a company over a data communications network which in case of electronic commerce performed by the company allows to perform immediate logging of the data of the transactions carried out online.

Another object of the present invention is to provide a method and a device for performing the accounting of a company over a data communications network that allows the company director to rapidly consult the database created for the company and allows to print the chosen data.

Another object of the present invention is to provide a method and a device for performing the accounting of a company over a data communications network that are highly reliable, relatively simple to provide and at competitive costs.

This aim and these and other objects that will become apparent hereinafter are achieved by a device for performing accounting over a data communications network, characterized in that it comprises a unit for accessing a data communications network;
at least one application program that resides in said unit for accessing the data communications network;
at least one database suitable to store data of at least one user, said application program comprising means for entering data related to said user, means for enabling electronic commerce, means suitable to perform invoicing and cancellation of the products sold over the data communications network from an inventory of said user.

Further characteristics and advantages of the invention will become better apparent from the description of preferred but not exclusive embodiments of the method and the device according to the present invention, illustrated only by way of non-limitative example in the accompanying drawings, wherein:

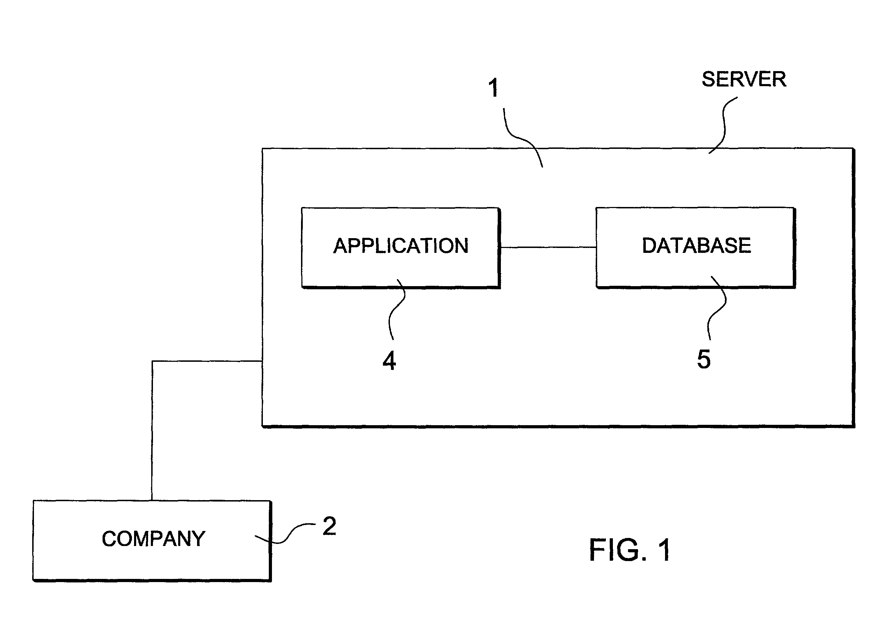

Figure 1 is an exemplifying block diagram of the device according to the present invention; and

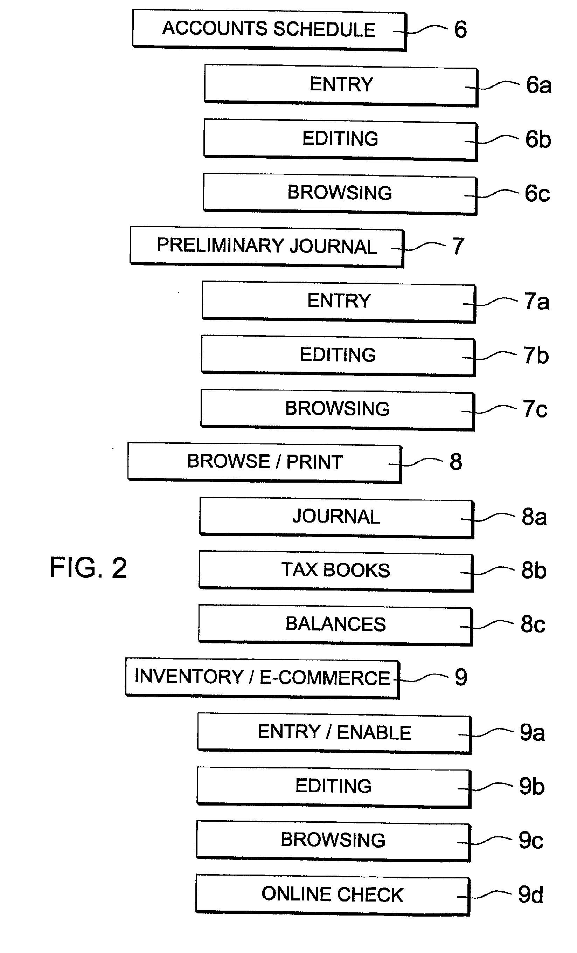

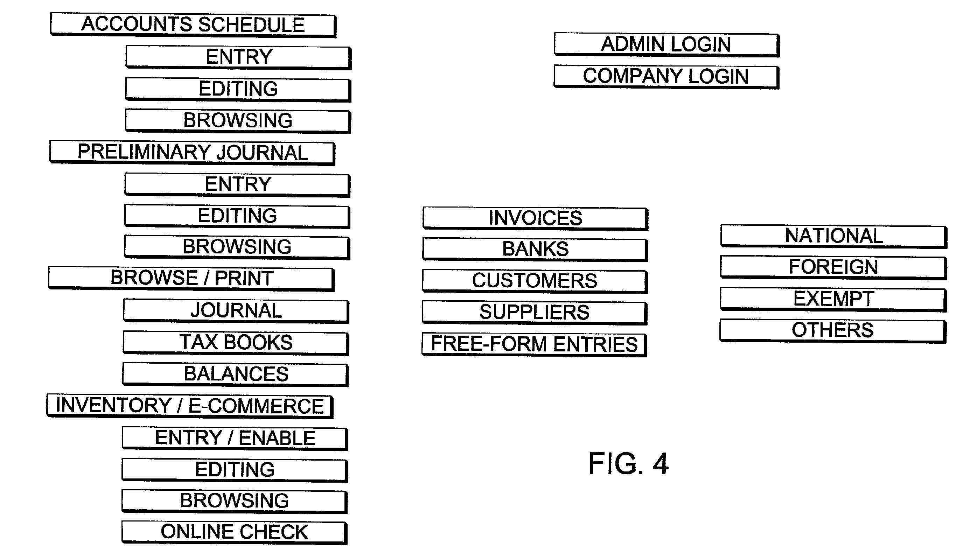

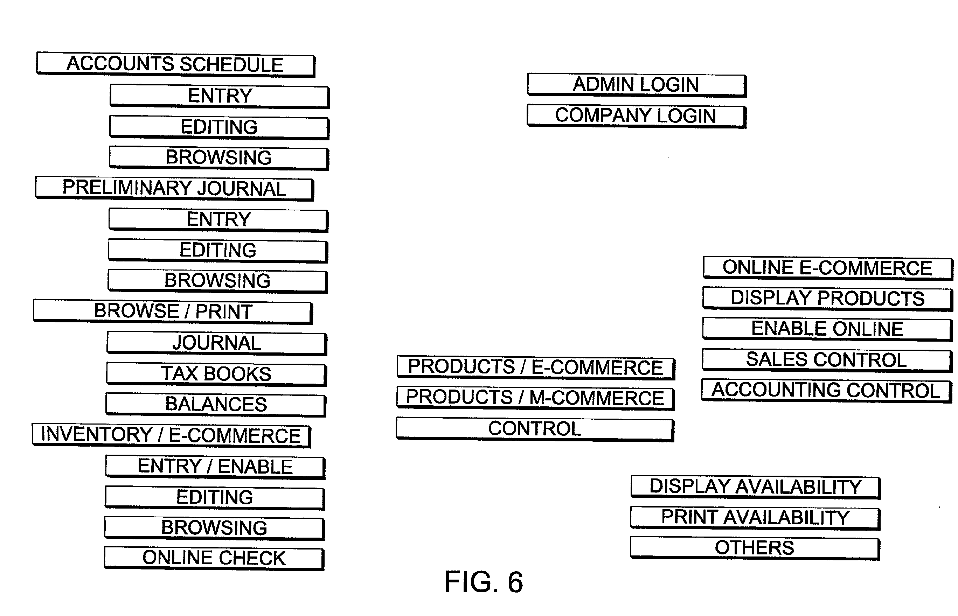

Figures 2 to 7 illustrate the functions offered by the method according to the present invention.

With reference to the above cited figures, the device according to the present invention comprises a unit 1 for enabling access to a data communications network, for example the Internet, to which a company 2 that wishes to perform accounting over the data communications network connects.

The connection can occur for example over a telephone network 3.

The unit for enabling access to the data communications network comprises at least one application program 4 that allows the company that connects, or the user in general, to develop or use a plurality of accounting functions.

The application program 4 is connected to at least one database 5, which stores all the data related to the company.

In practice, the application program 4 according to the invention allows, once the user has registered himself so as to identify himself at the unit 1, to access an accounting screen 6 that provides a data entry option 6a, a data edit option 6b, and an option 6c of browsing said data.

The application program 4 furthermore allows a step 7 of entering tax data of the company 2, with corresponding entry, editing and browsing steps 7a, 7b, and 7c. Furthermore, the application program 4 has a step 8 of browsing/printing the entered data, with a stem 8a and a step 8b of browsing the tax books and a balance management step 8c.

The application program 4 furthermore allows stock management, step 9, with enabling of electronic commerce, and therefore a step 9a of entering the products of the company and enabling electronic commerce, an editing step 9b, a browsing step 9c and a step 9d of online verification.

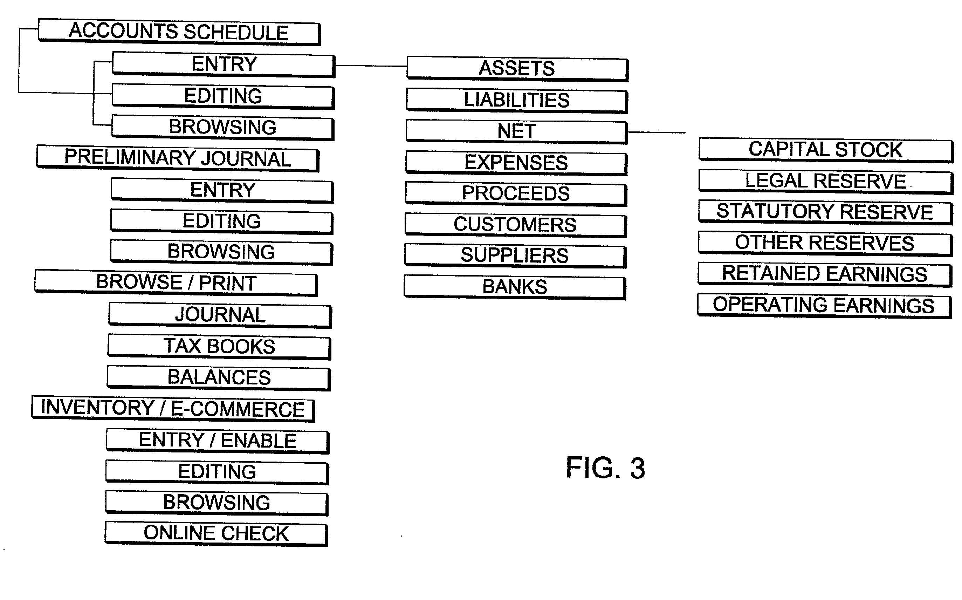

With reference now to Figure 3, the entry step 6a in the accounts schedule step 6 provides a choice among the following options:
-- assets
-- liabilities
-- net
-- expenses
-- proceeds
-- customers
-- suppliers
-- banks
and the "net" option in turn provides for the following possible options:
-- capital stock
-- legal reserve
-- statutory reserve
-- other reserves
-- retained earnings
-- operating earnings.

In turn, the step 7 provides a choice among the following possible options:
-- invoices
-- banks
-- customers
-- suppliers
-- free-form entries
and in turn the invoices can be divided into national, foreign, exempt, and others.

Furthermore, entry of daily entries by means of the application program 4 allows to save the entered data in the database 5 by means of a logging step.

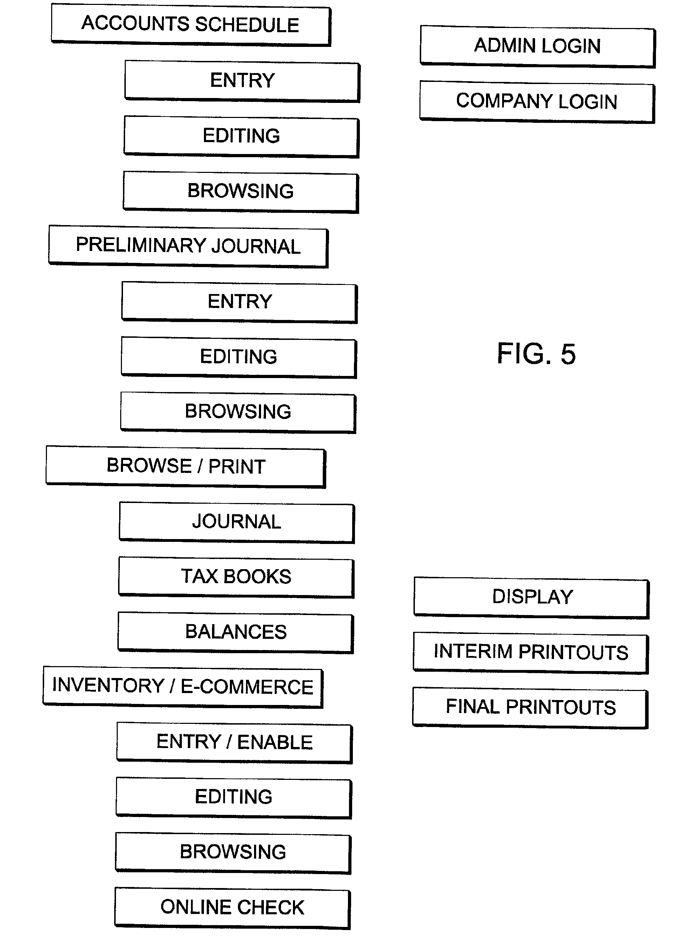

The application program 4 furthermore has, in the step 8, as shown in Figure 5, a step of processing the data stored in the database 5 and a return to the user for editing or display.

It is obviously possible to print the data contained in the database.

Figure 5 shows how it is possible to perform both provisional printouts and final printouts and also display the data present in the database.

Finally, step 9 provides for processing of the data present in the database with entry of the products of the company and enabling of the online publication of said products.

There are functions for checking the volume generated by the network, for automatically logging in the accounts the sales conducted online, and the corresponding tax obligations and for removal from stock.

Essentially, therefore, the method and the device according to the invention allow to place online a plurality of products chosen by the user (in this case for example the company 2) and to perform an automatic accounting of the sales conducted online, with the corresponding removal from stock.

Accordingly, the accounting as regards electronic commerce is highly simplified because of the connection of the user 2 to the unit 1 for accessing the data communications network, which logs in its database related to the user 2 all the operations linked to that user.

There is also a function of the device according to the invention that allows an administrator of the device according to the invention to check and view, for each company, the following data:
-- number of entries made;
-- number of printouts made (ledgers, journals, tax registers of any kind);
-- number of requested trial and final balances;
-- number of tax payments made;
this is done in order to allow a calculation for the service offered by the unit 1 for accessing the data communications network.

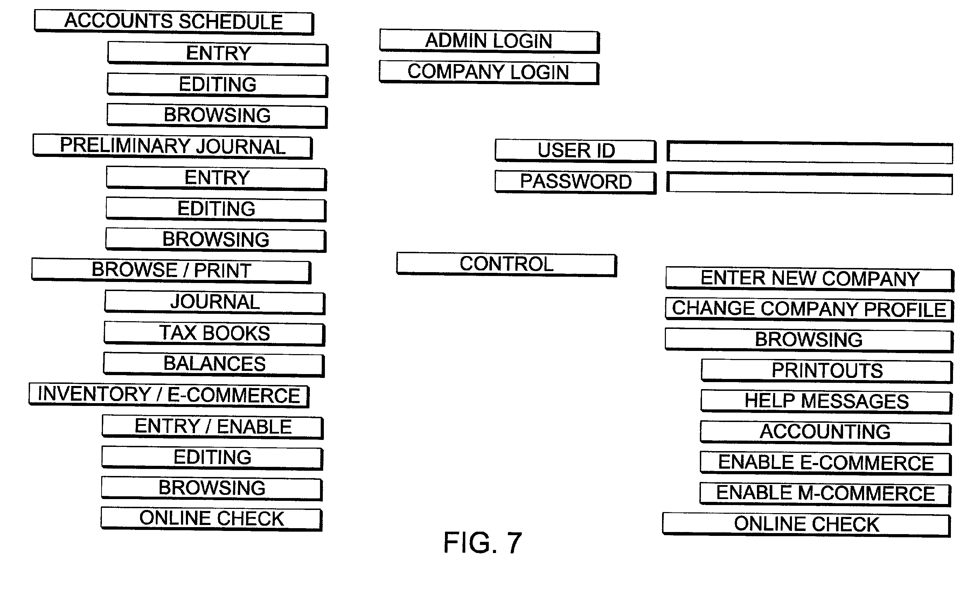

The step of checking the number of data items entered by the user 2 is designated by the reference numeral 12 in Figure 7.

In practice it has been found that the device and the method according to the invention allow to maintain the accounting of a company directly over the data communications network, utilizing the unit for accessing the data communications network to record in an appropriate database present therein, and connected to an application program, all the data related to the operations performed by the company, both for civil-law purposes and for tax purposes.

Furthermore, it allows to enable electronic commerce by directly placing the products of the company online and then perform invoicing and cancellation of sold products from the stock of the company.

The device and the method thus conceived are susceptible of numerous modifications and variations, all of which are within the scope of the inventive concept; all the details may furthermore be replaced with other technically equivalent elements.

The disclosures in Italian Patent Application No. MI2000A002506 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A device for performing accounting over a data communications network, **characterized in that** it comprises a unit for accessing a data communications network;
at least one application program that resides in said unit for accessing the data communications network;
at least one database suitable to store data of at least one user, said application program comprising means for entering data related to said user, means for enabling electronic commerce, and means suitable to perform invoicing and cancellation of the products sold over said data communications network from an inventory of said user.

2. The device according to claim 1, **characterized in that** said application program comprises means for allowing to browse and print said data.

3. The device according to claim 1, **characterized in that** said application program comprises inventory management means.

4. The device according to one or more of the preceding claims, **characterized in that** said application program comprises means for processing the data present in said database.

5. The device according to one or more of the preceding claims, **characterized in that** said data entry means comprise means for entering the data, for editing the data and for browsing the data.

6. The device according to one or more of the preceding claims, **characterized in that** said means for managing the inventory of said application program comprise means for placing products of said user online with enabling for electronic commerce, means for modifying the entry of products, and means for browsing and checking on said data communications network.

7. The device according to one or more of the preceding claims, **characterized in that** said data entry means comprises means suitable to perform at least one of the following possible options:
-- assets
-- liabilities
-- net
-- expenses
-- proceeds
-- customers
-- suppliers
-- banks.

8. The device according to one or more of the preceding claims, **characterized in that** said data entry means comprise means for entering tax data of said user, with choice among at least one of the following possible options:
-- invoices
-- banks
-- customers
-- suppliers
-- free-form entries
said invoices being classifiable into national, foreign and exempt invoices.

9. A method for performing account by means of a data communications network, **characterized in that** it comprises the steps of:
entering online a plurality of products meant to be sold and chosen by the user;
automatically logging in the accounts the online sales of said products;
cancelling the sold products from a virtual inventory created on said data communications network by entering said products.

10. The method according to claim 9, **characterized in that** said step of entering said products online includes enabling the electronic commerce of said products on said data communications network.

11. The method according to claim 9, **characterized in that** said step of logging in the accounts said sales performed online includes entering tax data of said person in order to perform automated accounting.
